# EUROPÄISCHE PATENTSCHRIFT

(11) **EP 2 944 610 B1**
(45) Veröffentlichungstag und Bekanntmachung des Hinweises auf die Patenterteilung: **17.04.2019**
(21) Anmeldenummer: 14001690.8
(22) Anmeldetag: 14.05.2014
(51) Int. Cl.: C01F 11/02, A46D 1/00, A46B 13/00

(54) **VERWENDUNG VON FORMKÖRPERN ZUR HERSTELLUNG VON KALZIUMOXID-REICHEN STÄUBEN ZUR BEHANDLUNG VON PFLANZEN UND NAHRUNGSMITTELN SOWIE ENTSPRECHENDES BEHANDLUNGSVERFAHREN FÜR PFLANZEN UND NAHRUNGSMITTEL**
USE OF MOULDED ARTICLES FOR THE PREPARATION OF CALCIUM OXIDE RICH POWDER FOR TREATING PLANTS AND FOODSTUFFS, AND CORRESPONDING PROCESS FOR TREATING PLANTS AND FOODSTUFFS
UTILISATION D'ARTICLES MOULES POUR LA PRODUCTION DE POUDRES RICHES EN OXYDE DE CALCIUM POUR LE TRAITEMENT DE PLANTES ET DE PRODUITS ALIMENTAIRES, ET PROCEDE DE TRAITEMENT POUR PLANTES ET PRODUITS ALIMENTAIRES CORRESPONDANT

(43) Veröffentlichungstag der Anmeldung: 18.11.2015
(73) Patentinhaber: Kalkfabrik Netstal AG, 8754 Netstal (CH)
(72) Erfinder: Wendelin, Jan Stark, 4900 Langenthal (CH)
(74) Vertreter: Grimm, Siegfried

(56) Entgegenhaltungen:
- EP-A2- 0 246 454
- WO-A1-99/29432
- DE-A1- 2 533 554
- DE-U1- 20 020 614
- FR-A- 433 403
- US-A- 2 899 289

## Beschreibung

Die vorliegende Erfindung beschreibt eine Vorrichtung, geeignet zur Bereitstellung von Wirkstoff-haltigen Stäuben, insbesondere zur lokalen und kontrollierten Bereitstellung von Kalziumoxid-reichen Stäuben. Die Erfindung betrifft die Verwendung solcher Kalziumoxid-reichen Stäube und Verfahren zur Ausbringung solcher Stäube. Weiterhin beschreibt die Erfindung Lagerformen für Kalziumoxid-reiche Stäube. Die Erfindung betrifft die Verwendung solcher Lagerformen und beschreibt auch die Herstellung solcher Lagerformen.

Die Bereitstellung von Wirkstoff-haltigen Stäuben ist ein grundsätzliches technisches Problem. Insbesondere reaktive, Wirkstoff-haltige Stäube, wie bspw. Kalziumoxid-reiche Stäube, können im technischen Massstab nur unzureichend als Staub zur Verfügung gestellt werden.

Kalkstein, gebrannter und gelöschter Kalk sind bekannte technische Produkte, Details können Kirk-Othmer (Encyclopedia of Chemical Technology, 2010, Wiley, Stichwort "lime and limestone") entnommen werden. Kalkstein ist in zahlreichen Konsumgütern enthalten, wird in industriellen Prozessen verwendet und dient als Ausgangsmaterial für gebrannten Kalk (ein Gemisch welches überwiegend Kalziumoxid enthält) und gelöschten Kalk (ein Gemisch welches überwiegend Kalziumhydroxid enthält). Gebrannter Kalk wiederum dient als Ausgangsmaterial für gelöschten Kalk. Kalziumoxid ist sehr reaktiv und empfindlich gegenüber Wasser und Feuchtigkeit und hat wegen der allgegenwärtigen Luftfeuchtigkeit nur begrenzte Anwendungsfelder gefunden. Die Empfindlichkeit gegenüber Luftfeuchtigkeit nimmt zu, je kleiner die Kalziumoxid-partikel sind, da das Verhältnis Oberfläche zu Masse sich ungünstig verschiebt. Im Gegensatz zu Kalkstäuben (feines Kalk-Pulver, Gesteinsmehl) sind daher Anwendungen von Kalziumoxid (gebranntem Kalk) als feines Pulver bis jetzt P164357EP00 specification 2018-11-01.docx sehr beschränkt zur Anwendung in industriellem oder technischem Massstab gelangt. US 2899289 beschreibt Formkörper welche im wesentlichen aus gebranntenm Kalk und einer Fettsäure bestehen. Diese sind zur Behandlung von Metalloberflächen geeignet; dabei soll insbesondere die Staubbildung vermieden werden.

Die hohe Reaktivität von Kalziumoxid hat daher auch zu Einschränkungen in der Anwendungsmenge geführt, und typischerweise wird Kalziumoxid in grossen Gebinden (Mengen von 25 kg bis mehrere Tonnen) gehandelt und aufbewahrt. Damit liegt ein günstigeres Verhältnis von Luftkontakt zu Masse vor, und das Material ist über einen technisch sinnvollen Zeithorizont, insbesondere 1 Woche bis 12 Monate, stabil.

Die hohe Reaktivität von Kalziumoxid-reichen Materialien führt zudem zu sogenanntem Verbacken, falls feingemahlenes Pulver gelagert wird. Wie aus dem Alltag bei der Lagerung von feingemahlenem Zucker (Staubzucker, Puderzucker) bekannt ist, führen bereits Spuren von Feuchtigkeit dazu, dass die Fliessfähigkeit des Materials abnimmt, und sich harte Klumpen bilden. Damit geht dann die Möglichkeit einer einfachen Anwendung des Materials als Pulver / Staub verloren.

Daher erstaunt es nicht, dass Kalziumoxid-reiche Stäube bis jetzt keine verbreitete Anwendung im nicht-grosstechnischen Alltag gefunden haben. Im Gegensatz dazu sind stabile Pulver im Alltag sehr verbreitet, z.B in Kosmetika, bei der Nahrungsmittelzubereitung (Salz, Mehl, Puderzucker, Stärke, Trockensuppen etc.), oder im Pflanzenschutz (Staub-Schwefel, Gesteinsmehl).

Es besteht daher ein grundlegendes Potenzial, neue Produktgruppen oder Anwendungen zu ermöglichen, sofern das hochreaktive Kalziumoxid als feines Pulver bereitgestellt werden könnte.

Die vorliegende Erfindung beschreibt ein Verfahren womit aus einer geeigneten Lagerform von Kalziumoxid-haltigem Material lokal und kontrolliert ein mit fein verteiltem Kalziumoxidreichem Staub beladener Luft- oder Gasstrom erzeugt werden kann. Da oft nur kleine Mengen an solchen Stäuben benötigt werden, oder diese Stäube vom Anwender manuell ausgetragen werden, sind die verwendeten Mengen oft begrenzt, und die Staub-Bereitstellung muss daher auch mit kleinen Mengen (weniger als ein Kilogramm bis wenige Kilogramm) zuverlässig funktionieren.

Es ist daher Aufgabe der vorliegenden Erfindung, eines oder mehrere der o.g. Probleme zu lösen. Eine weitere Aufgabe der vorliegenden Erfindung ist die Bereitstellung einer verbesserten Lagerform von Kalziumoxid.

Die vorstehend umrissenen Aufgaben werden gemäss den unabhängigen Ansprüchen gelöst. Die abhängigen Ansprüche stellen vorteilhafte Ausführungsformen dar. Weitere Ausgestaltungen der Erfindung können der Beschreibung und den Figuren entnommen werden.

Die Erfindung wird nachstehend im Detail erläutert. Sofern sich aus dem direkten Zusammenhang keine andere Bedeutung ergibt, haben die folgenden Begriffe die hier angegebene **Bedeutung.**

Die im Zusammenhang mit der vorliegenden Erfindung gegebenen allgemeinen, bevorzugten und besonders bevorzugten Ausführungsformen, Bereiche usw. können beliebig miteinander kombiniert werden. Ebenso können einzelne Definitionen, Ausführungsformen usw. entfallen bzw. nicht relevant sein. Der Begriff "umfassend" soll die Bedeutungen "enthaltend" und "bestehend aus" einschliessen.

Prozentangaben sind, soweit nicht anders vermerkt, als Massen-% angegeben.

Der Begriff "gebrannter Kalk" ist bekannt und bspw. in Kirk-Othmer (s.o.) beschrieben und enthält im wesentlichen CaO, typischerweise >90 m-%. In der vorliegenden Erfindung werden daher gebrannter Kalk und Kalziumoxid synonym verwendet. Gemäss der vorliegenden Erfindung liegt Kalziumoxid als partikuläres Material vor.

Der Begriff "Staub" ist allgemein bekannt. Im Rahmen der vorliegenden Erfindung betrifft der Begriff insbesondere ein Gas (wie bspw. Luft) beladen mit einem festen Wirkstoff (wie bspw. Kalziumoxid-haltige Partikel), wobei der feste Wirkstoff im Wesentlichen gleichförmig im Gas verteilt ist.

Im Zusammenhang mit der vorliegenden Erfindung werden "Submikron-Partikel" mit einem Grössenbereich von 100 nm bis 1000 nm, "Mikropartikel" von 1 bis 40 Mikrometer, bevorzugt von 1 bis 10 Mikrometer Durchmesser definiert. Korngrössen und -verteilung lassen sich mit bekannten Methoden bestimmen. Kleine Partikel (unter 10 Mikrometer Durchmesser) werden insbesondere mittels optischer Detektion (Laserstreuung), durch Mikroskopie (Licht-Mikroskopie oder Elektronenmikroskopie; Ausmessen der einzelnen Partikel und Berechnung der mittleren Partikelgrösse), oder in optischen Zentrifugen (z. B. Lumisizer, LUM GmbH oder in einer Röntgenzentrifuge, z.B. BI-XDC von "Brookhaven Instruments Corporation") die direkt einen hydrodynamischen Durchmesser liefern, gemessen.

Der Begriff "Partikel- oder Korngrösse" wird synonym verwendet, ist allgemein bekannt und kann nach gängigen Methoden bestimmt werden. Sofern sich in der vorliegenden Erfindung nichts anderes ergibt, wird die Partikelgrösse als "mittlere Partikelgrösse" angegeben. Für Partikel im Bereich von 0.3 bis 100 Mikrometer erfolgt die Messung bevorzugt mittels Lasergranulometrie (z.B. Sympatec HELOS). Für Partikel über 100 Mikrometer Grösse wird bevorzugt eine Siebanalyse angewendet. Im Zusammenhang mit der vorliegenden Erfindung wird, in Anlehnung zu Kalkprodukten der Siebdurchgang bei 0.09 mm nach Luftstrahlsiebung angegeben (Details in EN 459 Baukalk).

Die vorliegende Erfindung wird weiterhin durch die **Figuren** illustriert.

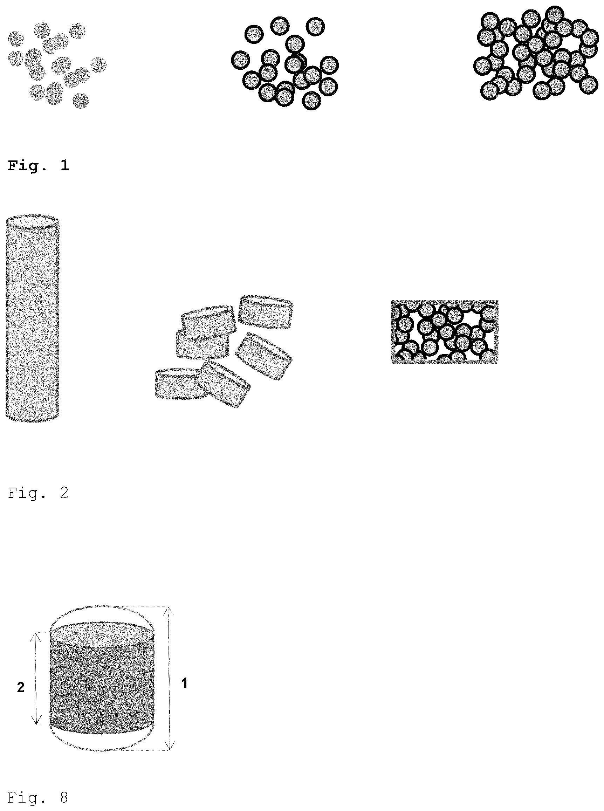

Fig. 1 zeigt in schematischer Darstellung: links normales Pulver, mittig Oberflächen-modifiziertes Pulver, rechts gepresstes Oberflächen-modifiziertes Pulver. Normales Pulver ist das typische Material für Anwendungen als Staub, solches Pulver ist verformbar und besteht aus einer Komponente. Oberflächen-modifiziertes Pulver ist verformbar, es passt sich an eine neue Form (z.B. Behälter) an und besteht aus mindestens 2 Komponenten. Gepresstes Pulver mit Oberflächen-Modifikation liegt als festes Material vor, bspw. als fester Formkörper, es passt sich an eine neue Form (z.B. Behälter) nicht an und besteht aus mindestens 2 Komponenten.
Fig. 2 zeigt in schematischer Darstellung Lagerformen für einen Applikator: links in zylindrischer Form, wobei ein oder mehrere Zylinder pro Applikator eingesetzt werden können; mittig in tablettierter Form, wobei eine Vielzahl von Tabletten (bspw. als lose Schüttung) im Applikator eingesetzt werden können; rechts ein Ausschnitt des Lagermaterials wie im Elektronenmikroskop ersichtlich.
Fig. 8 zeigt eine Lagerform gemäss Bsp. 1
Fig. 9 zeigt eine Ausführungsform der Vorrichtung, gemäss Bsp. 2, zwei alternative Einlässe 300 sind vorgesehen.

In einem **ersten Aspekt** wird daher beschrieben:
a) die Verwendung von Vorrichtungen mit einem Vorratsbehälter (100) und einer Zerstäuber-Einheit, zur Erzeugung eines Kalziumoxid-reichen Staubes aus einer festen Lagerform
b) eine Vorrichtung zum Erzeugen eines staubbeladenen Gasstroms aus einer festen Lagerform, die Vorrichtung umfassend einen Vorratsbehälter (100) und eine Zerstäuber-Einheit
c) Verfahren zum Betrieb dieser Vorrichtungen Dieser Aspekt soll nachstehend erläutert werden.

Geräte zur Zerkleinerung von Feststoffen im grosstechnischen Massstab sind an sich bekannt, und umfassen Kugelmühlen oder Backenbrecher. Solche Vorrichtungen sind jedoch aufgrund von Grösse und Gewicht ungeeignet um lokal die Herstellung von Pulvern zu ermöglichen. Insbesondere sind diese Geräte ungeeignet, um vom Anwender zum Anwendungsort getragen zu werden. US 7065944 beschreibt ein tragbares Gerät zur Verbreitung von Stäuben für landwirtschaftliche Anwendungen. Das Gerät verwendet ein Pulver, welches durch die Schwerkraft über eine Dosierklappe gesteuert, in einen Luftstrom fällt, und so dispergiert wird. Da Kalziumoxid schnell verklumpt, und schlecht fliesst, ist die Anwendung eines solchen Verfahrens ungeeignet zur Bereitstellung von Kalziumoxid-reichen Wirkstoffen als Staub.

US 2112603, beschreibt eine handgetriebene Staub-Maschine, welche über 2 Kammern einen Staub herstellt. Die eine Mischkammer enthält wenige, harte Propeller-artige Blätter, die einen Feststoff zerschlagen. Das offene Gerät ist ungeeignet für empfindliche Wirkstoffe, und produziert einen sehr groben Staub.

US2006/0016918, beschreibt eine Vibrationseinheit (hopper) und eine Öffnung, zur Bereitstellung eines Staubes. Die Dosierung erfolgt über die Regulation der Öffnung zwischen einem Vorrats-Behälter und dem Austritts-Bereich, sowie der Vibrations-Stärke und Frequenz. Ähnlich beschreibt US 4071170 ein Gerät, in welchem über Vibration und Scherkraft getriebenes Zuführen von Pulver in einen Luftstrom verwendet wird.

US5429278, beschreibt ein Gerät zur Bereitstellung von Stäuben, basierend auf einem fluidisierten Pulver (Mischung durch einen Propeller), einem Gaseinlass, und einer Siebplatte zur Grössenselektion des Staubes. Ein solches Design ist für Kalziumoxid-reiche Wirkstoffe ungeeignet, da die Luftfeuchte rasch zu einem Verbacken des Pulvers in der Lagerkammer und Verstopfung der Siebplatte führen würde. Diese Anmeldung ist eine Weiterentwicklung von US 5'226'567 durch den gleichen Erfinder. Offenbar erkannte er, dass eine einfache Vermischung wie in US'567 vorgeschlagen, wenig geeignet ist, um zuverlässig Stäube in einen Gasstrom zu dispergieren. Daher wurde in der Folgeanmeldung US'278 dann ein Misch-Propeller eingefügt. Ähnlich beschreibt US4474327, ein Vorrichtung, wo ein Luftstrom durch ein fluidisiertes Pulver durchgeführt wird. Wieder würde die Luftfeuchtigkeit das Pulver zum Verklumpen bringen, falls ein Kalziumoxidreiches Material eingesetzt wird.

US4089441, beschreibt ein Gitter und einen massiven, spiralförmigen, rotierenden Draht als Pulver-Dispergier- und - Dosier-Einheit. Dieses robuste Design ist breit anwendbar, allerdings muss der Wirkstoff wieder als Pulver vorliegen, was aus obigen Gründen (Verbacken etc) für Kalziumoxid-reiche Wirkstoffe nicht attraktiv ist.

US2007/0193646, beschreibt einen komplexen Aufbau, bei dem eine rotierende Bürste ein Pulver durch eine Siebplatte drückt. Das Pulver fällt dann in einen Trichter oder Kanal, wo es durch Vibrationen und Ultraschall in einem Gas verteilt wird. Wieder wird ein Pulver als Ausgangsmaterial und Lagerform verwendet. Ultraschall ist technisch aufwändig und für lokal einsetzbare Einheiten schwerer umsetzbar.

US6432882 beschreibt eine Vorrichtung zur Bildung organischer Aerosole. Die Vorrichtung arbeitet unter Verwendung einer rotierenden Bürste, um ein flüchtiges, organisches Pulver in einen Gasstrom zu dispergieren (Figur 8) und nachher in einer geheizten Kammer zu verdampfen.

Die hier beschriebene Vorrichtung ist insbesondere zur lokalen und kontrollierten Bereitstellung von Kalziumoxid-reichen Stäuben geeignet.

Der erste Aspekt betrifft die Verwendung einer Vorrichtung mit einem Vorratsbehälter (100) und einer Zerstäuber-Einheit, zur Erzeugung eines Kalziumoxid-reichen Staubes aus einer festen Lagerform, dadurch gekennzeichnet, dass die Zerstäuber-Einheit (a) ein Gehäuse (200, 700), (b) eine im Gehäuse drehbar gelagerte Bürste (500), (c) eine Antriebseinheit (250) für die Bürste (500), (d) einen GasEinlass (300), (e) einen Staub-Auslass (400) und (f) eine Öffnung zwischen Vorratsbehälter (100) und Gehäuse (200, 700), derart, dass eine die Öffnung passierende Lagerform von der Bürste gestreift wird, umfasst.

Der erste Aspekt betrifft ferner eine Vorrichtung zum Erzeugen eines staubbeladenen Gasstroms aus einer festen Lagerform, die Vorrichtung umfassend einen Vorratsbehälter (100) und eine Zerstäuber-Einheit, wobei die Zerstäuber-Einheit (a) ein Gehäuse (200, 700), (b) eine im Gehäuse drehbar gelagerte, walzenförmige Bürste (500), (c) eine Antriebseinheit (250) zur Rotation der Bürste (500), (d) einen Einlass (300) in das Gehäuse für einen Gasstrom, (e) einen Auslass (400) aus dem Gehäuse für einen staubbeladen Gasstrom, und (f) eine Öffnung zwischen Vorratsbehälter (100) und Gehäuse, derart, dass eine die Öffnung passierende Lagerform von der Bürste gestreift wird, umfasst.

Funktionsweise: Die nachstehend beschriebene Lagerform des Kalziumoxid-reichen Wirkstoffes wird mittels geeigneter Vorrichtung aus einem Vorratsbehälter gegen eine rotierende Bürste gedrückt. In Abhängigkeit der Drehzahl, Bürsten-Parameter (Drahtdurchmesser, Härte, Form und Borstendichte (Borsten pro Oberfläche Zylinder) kann damit die Grössenverteilung des Wirkstoffes und die Menge Staub kontrolliert werden. Das erfindungsmässige Design erlaubt einfache Reinigung und Unterhalt, zuverlässige Dosierung der Staubmenge, einfaches und rasches An- und Abschalten, sowie unproblematisches Handhaben des Kalziumoxid-reichen Wirkstoffes.

Bürsten: Geeignete Bürsten sind an sich bekannt, und werden seit langem in der Maschinenindustrie und in Handwerksbetrieben eingesetzt, unter anderem zur Reinigung von Komponenten (z.B. Entfernen von Schmutz oder Rost von Bauteilen), oder zum Polieren. Geeignete Bürsten bestehen aus einem rotierbar gelagerten Grundkörper und einer Vielzahl senkrecht zum Grundkörper angeordneter Borsten oder Borstenbüscheln. Eine breite Variante von Bürsten und Geometrien sind anwendbar. Vorteilhaft umfasst die Bürste einen axial drehbaren Grundköper mit radial darauf angeordneten Borsten. Geeignete Borsten bestehen typischerweise aus Metall-Draht; speziell geeignete Borsten bestehen aus Edelstahl oder Messing.

Die Lagerform des Wirkstoffes wird über Schwerkraft oder ein geeignetes mechanisches Element (z.B eine Feder) gegen die Bürste gedrückt. Dies bewirkt, dass die die Öffnung passierende Lagerform von der Bürste gestreift wird.

In einer weiteren Ausführungsform, insbesondere kleinen Vorrichtungen, werden elektrische oder Benzin- oder Dieselgetriebene Motoren zum Einsatz kommen. Speziell in Hanglagen (Reben) oder an schwer zugänglichen Kulturen sind tragbare, also kleine Systeme, mit Benzinmotor von Vorteil. Geeignete Motoren sind hinreichend bekannt, und werden routinemässig in Laubbläsern oder Fadenmähern eingesetzt.

In einer alternativen Ausführungsform, insbesondere bei grossen Vorrichtungen, wie im Einsatz in der Landwirtschaft, wird auf einen eigenen Antrieb oder Motor verzichtet. Die Vorrichtung kann dann direkt über eine Achse, durch einen Traktor oder Ähnliches, angetrieben werden. Solche modularen Systeme sind in der Landwirtschaft sehr verbreitet, und erlauben, rasch von einem auf ein anderes System umzurüsten.

Die Erfindung betrifft ein Verfahren zur Ausbringung der hier beschriebenen Stäube. Erfindungsgemäss erfolgt die Ausbringung von Kalziumoxid-reichen Stäuben auf ein Objekt/ Oberfläche unter Verwendung der hier beschriebenen Vorrichtung und der hier beschriebenen Lagerform. Speziell wird die Lagerform in den Vorratsbehälter 100 gefüllt, die Bürste in Rotation versetzt, Gas dem Einlass 300 zugeführt und der Auslass 400 auf das zu behandelnde Objekt / Oberfläche gerichtet. Das Verfahren erlaubt die lokale und kontrollierte Herstellung von Kalziumoxid-reichen Stäuben und ist geeignet zur Anwendung auf Oberflächen von technischen Gegenständen (Maschinen), von Produktionsoberflächen, von Lagerflächen, von Verpackungen, von Nahrungsmitteln, auf Pflanzen.

Das Aufbringen des erzeugten Staubes kann kontinuierlich oder diskontinuierlich (gepulst) erfolgen. Je nach Grösse und Geometrie sind zur Förderung von Stäuben auch diskontinuierliche Systeme von Vorteil. Hier wird dann mindestens ein Stellglied, (bspw. ein Ventil) zur Regelung des Luft oder Gasstromes am Einlass des Gehäuses vorgesehen. Die Erfindung betrifft ferner die Verwendung so hergestellter Stäube wie nachfolgend im zweiten Aspekt beschrieben.

In einem **zweiten Aspekt** werden Lagerformen für Wirkstoff-haltige Stäube, insbesondere Lagerformen für Kalziumoxid-reiche Stäube beschrieben. Dieser Aspekt soll im Folgenden näher erläutert werden.

Die Bereitstellung Kalziumoxid-reicher Stäube könnte theoretisch auf zwei verschiedene Arten erfolgen:
A) Lagerung eines stabilen Ausgangsmaterials und lokales Herstellen des Kalziumoxides. Da sich Kalziumoxid erst bei hohen Temperaturen bildet, beinhaltet diese Variante immer eine Hochtemperatur-Einheit mit damit verbundenem Energieverbrauch und Isolationsbedarf. Chai et al (WO95/15293) offenbaren ein solches synthetisches Verfahren zur Herstellung von Kalziumoxidpartikeln durch Zersetzung von Kalziumcarbonat im Plasma. Es ist offensichtlich, dass ein derartiger Produktionsweg energieaufwändig und teuer ist. Das Verfahren wäre geeignet um kleine Mengen an Kalziumoxidhaltigen Stäuben herzustellen, allerdings sind die dazu verwendeten Kammern und Apparate sehr schwer und extrem teuer und somit unpraktisch und wirtschaftlich nicht attraktiv.
B) Lagerung eines Kalziumoxid-reichen Materials und lokale Umwandlung der Lagerform in den gewünschten Staub. Diese Variante muss zuerst einen Schutz des Kalziumoxid-reichen Materials gegen Umwelteinflüsse (v.a. Wasserdampf aus der Luft) bieten. Dann muss das Material zuverlässig in Staubform gebracht werden. Da Kalziumoxid äusserst reaktiv ist und Anwendungen von Kleinmengen in nicht-grosstechnischem Umfeld durch wenig spezialisierte Anwender erfolgen, muss eine solche Methode zuverlässig und das Gerät einfach in Unterhalt, Arbeitssicherheit und Wartung sein.

Gemäss zweitem Aspekt wird diese Variante B realisiert. Dies erlaubt eine Bereitstellung mit weniger lokalem EnergieVerbrauch, da hier die Lagerform nur mechanisch in Staubform überführt wird. Gegenstand der vorliegenden Erfindung ist somit auch eine Lagerform für Kalziumoxid-reiche Stäube.

Demnach enthalten Kalziumoxid-reiche Wirkstoffe in ihrer Lagerform mindestens 67 Massen-% Kalziumoxid, welches in kristalliner Form vorliegt, und mittels Pulverröntgenbeugung (X-ray diffractometry, zum Beispiel Geräte der Firma PanAnalytic oder Bruker) zuverlässig bestimmt werden kann. Dazu wird zuerst ein Pulver-XRD aufgenommen, und dann mittels Rietveld-Verfeinerung der Massengehalt an Kalziumoxid ermittelt. Bevorzugte Wirkstoffe in ihrer Lagerform enthalten bevorzugt mindestens 80 Massen-% Kalziumoxid, in kristalliner Form. Der verbleibende Anteil der Lagerform umfasst ein oder mehrere Hilfsmittel und Verunreinigungen.
Der Begriff Verunreinigungen umfasst Verbindungen, wie sie in solchen technisch hergestellten Materialien typischerweise vorkommen. Typische Verunreinigungen oder Begleitstoffe sind in Kirk-Othmer (s.o.) erwähnt.
Der Begriff Hilfsmittel umfasst mindestens eine organische Komponente.

Die Lagerform stellt eine günstige Kombination von Eigenschaften dar, insbesondere die Möglichkeit
(i) das sonst sehr reaktive sowie reizende, haut- und augengefährdende Kalziumoxid durch wenig oder ungeschultes Anwender sicher zu verwenden;
(ii) das sonst sehr rasch reagierende, verbackende oder verklumpende Kalziumoxid zuverlässig im Staub-Bildungsprozess zu dosieren;
(iii) den Wirkstoff unter minimaler Staub-Entwicklung aus Grossgebinden (Fässer, grosse Säcke) in Vorrats-Behälter an Anwendungsgeräten abzufüllen.
(iv) die Möglichkeit, die Staub-Bereitstellung rasch und zuverlässig zu starten (a) oder zu beenden (b).
(v) das Anwendungsgerät nach Gebrauch einfach zu entleeren, und die Reste des Wirkstoffs einfach zu entsorgen;
(vi) in einem geeigneten Anwendungsgerät zuverlässig einen Strom von Partikel in einem Luft oder Gasstrom zu erzeugen.
Der o.g. Punkt (iii) ist speziell wichtig, da Kalziumoxid Stäube die Gesundheit gefährden; für einen 8-Stunden-Arbeitstag wird in der Schweiz eine maximale Konzentration von 2 mg Kalziumoxid pro Kubikmeter Luft vorgeschrieben (einatembarer Staub; Kurzzeitgrenzwwert: dto.; SUVA Grenzwerte am Arbeitsplatz 2014).

Der o.g. Punkt (iv) ist für Kleinanwendungen in spezialisierter Umgebung oder bei lokal definierter Anwendung sehr wichtig, wo nur bestimmte Flächen mit dem Wirkstoff behandelt werden sollen.

Die Lagerform ist charakterisiert durch das Vorhandensein von verpressten, Kalziumoxid-reichen Primärpartikeln, und Hilfsmitteln umfassend zumindest einen organischen Binder, welche sich vor allem auf der Oberfläche und zwischen den Primärpartikeln befinden. Eine geeignete Analysenmethode um obige Struktur zu erfassen ist die Elektronenmikroskopie. Die Primärpartikel sind bevorzugt wenige Mikrometer gross.

Die Lagerform ist porös, und gekennzeichnet durch eine Porosität von mindestens 10 Volumen-%, bevorzugt mehr als 15 Volumen-%. Dadurch unterscheidet sie sich von gebranntem Stückkalk, der je nach Brenngrad eine hohe Dichte aufweist und keine grösseren Mengen an organischen Verbindungen enthält. Entsprechend weist die Lagerform eine geringere Härte und eine deutlich tiefere Dichte als reines Kalziumoxid (3,3 g/cm3) auf. Typische Dichten der hier beschriebenen Lagerformen sind 1.5 bis 2.5 g/cm3.

Die geeignete Lagerform unterscheidet sich weiter von Stückkalk durch eine geringere Härte. Damit ist die erfindungsgemässe lokale Staub-Bereitstellung noch besser und profitiert damit von der spezifischen, hier beschriebenen Lagerform.

Die Fig. 1 zeigt den Unterschied in der Anwendung von Pulvern als Lagerform (bekannte, routinemässige Form der Lagerung) und der hier verwendeten, gepressten und modifizierten Lagerform des Kalziumoxid-reichen Pulvers.

Die Überprüfung solcher Materialien kann mittels geeigneter mikroskopischer Methoden erfolgen. Geeignet sind dazu vor allem Elektronenmikroskope, sogenannte "Scanning Electron Microscopes", wie von der Firma FEI hergestellt.

Die Fig. 2 zeigt schematisch die erfindungsgemäss verwendete Lagerform des Kalziumoxid-reichen Wirkstoffes in der Form von Stäben, oder Stangen oder als Schüttung von Tabletten.

Die Primär-Partikelgrösse der Lagerform kann einen weiten Bereich annehmen und ist im Wesentlichen vom rohen Kalziumoxid und dessen Verarbeitung abhängig. Typische Werte für einen mittleren Durchmesser sind < 30 µm. Es ist jedoch auch möglich, für den mittleren Durchmesser Werte < 10 µm vorzusehen. Die Partikelgrösse kann an die angestrebte Verwendung angepasst werden.

Die Lagerform ist bevorzugt Staub-arm. Der Gehalt an Staub kann gemessen werden als Gehalt an frei beweglichem Pulver in einer Probe. Der Gehalt an feinstem Pulver (<20 Mikrometer Siebfraktion) in einem Kilogramm der Lagerform des Wirkstoffes beträgt bevorzugt weniger als 1 Masse-%, also weniger als 10 Gramm.

Die Geometrie der Lagerform kann in weiten Bereichen variiert werden. Geeignete Formen umfassen Tabletten mit zylindrischer Form und abgerundeten Kanten, Kugeln oder zylindrische Stäbe. Andere Formen sind ebenfalls einsetzbar, allerdings haben sich obige Formen als einfach herstellbar erwiesen. In bestimmten, robusten Anwendungen können sogar unregelmässige Brocken oder Bruchstücke eingesetzt werden. Solche unregelmässigen, verpressten Materialien sind bestens bekannt bei der Verwendung von Kohlestaub als Grill-Brennstoff. Hier wird Kohlestaub mit einem Binder zu sogenannten Briquets verpresst, typischerweise Zentimeter bis einige Zentimeter grosse längliche Klumpen mit abgerundeten Ecken und Kanten zwecks Staubbildungs-Reduktion.

Der zweite Aspekt betrifft ferner die Herstellung der hier beschriebenen Lagerformen. Geeignete Lagerformen des Wirkstoffes werden hergestellt, indem (A) zerkleinerter, gebrannter Kalk mit Hilfsmitteln umfassend zumindest einen organischen Binder gemischt wird. (B) Die erhaltene Mischung verpresst wird.

Mischen: Geeignete Verfahren zur Vermischung von feinverteiltem, gebranntem Kalk und Hilfsmittel sind in der chemischen Verfahrenstechnik bekannt, und beinhalten Rühr- und Mischwerke, mit geeigneten Dosiersystemen. Die Mischung kann trocken oder mit einem flüssigen Additiv, welches nach erfolgter Vermischung wieder abgetrennt wird, erfolgen.

Pressen: Geeignete Verfahren zum Verpressen sind bekannt, und beinhalten Tablettierung wie in der Galenik (Herstellung von Tabletten von Medikamenten) oder Futtermittelherstellung (Strangpressen) oder Herstellung von Brennstäben für Kernkraftwerke oder Herstellung von Elektronik-Bauteilen für Starkstromanlagen oder der Grünkörperfertigung beim Pulverspritzguss oder in der Keramikverarbeitung.

Ausgangsmaterialien: Als Ausgangsmaterialien werden rohes Kalziumoxid (r-CaO), Hilfsmittel (MH) und allfällige Additiv(e) (Add) verwendet; diese sind kommerziell erhältlich oder nach allgemein bekannten Methoden herstellbar. Erfindungsgemäss können diese Materialien als reine Komponente, als Gemisch verschiedener Komponenten und in unterschiedlicher Reinheit vorliegen. So ist bspw. ein Bezug auf "Additiv" als "ein Additiv" oder "ein Additivgemisch" zu verstehen.

Rohes Kalziumoxid: Rohes Kalziumoxid ist ein grosstechnisches Produkt und in unterschiedlichen Reinheitsgraden unter der Bezeichnung "gebrannter Kalk" verfügbar. Das erfindungsgemässe Verfahren ist vom Reinheitsgrad unabhängig. Besonders geeignet ist das vorliegende Verfahren, wenn das rohe Kalziumoxid gebrannter Kalk ist, welcher aus natürlichem Kalkstein durch Brennen bei ca. 900 - 1100°C gewonnen wird. Solch natürlicher Kalkstein kann Kalziumreicher Kalkstein, Magnesiumreicher Kalkstein oder Dolomit sein. Der Begriff "roh" ist im Zusammenhang mit der vorliegenden Erfindung auf die chemische Zusammensetzung bezogen. Der Begriff rohes Kalziumoxid schliesst daher sowohl Kalziumoxid mit einer Grösse 0- 130 mm ein ("Stückkalk") als auch mit einer Grösse 0-200 µm ("Feinkalk").

Bevorzugt wird rohes Kalziumoxid mit tiefem Schwermetallgehalt, insbesondere kleiner als 10 mg/kg (Summe Antimon, Arsen, Blei, Cadmium, Chrom, Nickel, Quecksilber, Selen). Bevorzugt wird rohes Kalziumoxid, dessen Erdalkalimetall-Anteil zu mindestens 90 atom-% aus Kalzium besteht, und weniger als 10 atom-% Magnesium enthält
Die Reaktionsfähigkeit des eingesetzten rohen Kalziumoxids kann einen weiten Bereich annehmen und ist im Wesentlichen durch dessen Herstellung bestimmt. Die Reaktionsfähigkeit von Kalziumoxid wird nach EN 459-2 bestimmt (Baukalk - Teil 2: Prüfverfahren; Nasslöschkurve). Hier hat sich der t₆₀-Wert als messbare Eigenschaft von Kalziumoxid durchgesetzt. Für das vorliegende Verfahren sind t₆₀-Werte unter 5 Minuten geeignet; unter 2 Minuten bevorzugt; besonders geeignet sind t₆₀-Werte von 15 - 60 s.

Hilfsmittel: Das Hilfsmittel führt zu einer Modifikation des vermahlenen Kalziumoxids an der Oberfläche. Grundsätzlich kann das Hilfsmittel durch chemische Bindung (insbesondere ionische Bindung) oder Sorption (insbesondere Adsorption) erfolgen, oder partiell oder vollständig eine chemische Reaktion mit einem Teil des rohen Kalziumoxides eingehen. Dabei werden je nach Hilfsmittel auch neue chemische Verbindungen gebildet.

Geeignete Hilfsmittel umfassen zumindest einen organischen Binder und können aus einem breiten Spektrum an chemischen Verbindungen ausgewählt werden und werden u.a. durch die beabsichtigte Verwendung bestimmt. Geeignete Hilfsmittel sind insbesondere organische Binder ausgewählt aus der Gruppe der organischen Verbindungen mit saurem Charakter. Organische Verbindungen mit saurem Charakter sind bekannt und umfassen Tannine, Fettsäuren, Aminosäuren, Proteine und mit Säuregruppen funktionalisierte Polysaccharide. Diese Verbindungsklassen sind bekannt und bspw. in Römpps Lexikon der Chemie, 9. Auflage, beschrieben. Der Gehalt an organischem Binder in der Lagerform kann einen weiten Bereich von 1 - 33 m-% annehmen und hängt u.a. ab von der Einsatzmenge, der Partikelgrösse und den Verfahrensparametern. Typische Werte sind bevorzugt < 20 m-% bezogen auf die Masse an Kalziumoxid, bspw. 5-33 m-% organischer Binder.

Additive: Als Additive können Komponenten eingesetzt werden, die bei der Herstellung vorteilhaft sind, in der Lagerform jedoch nicht mehr enthalten sind.

Die Erfindung betrifft ferner die Verwendung von Lagerformen wie hier beschrieben zur Herstellung eines Kalziumoxid-reichen Staubes. Dabei kann zur Herstellung des Staubes insbesondere eine Vorrichtung wie vorstehend beschrieben zum Einsatz kommen.

Die hergestellten Stäube können überall dort verwendet werden, wo bisher Kalziumoxid eingesetzt wurde. Insbesondere können die hergestellten Stäube im Pflanzenschutz verwendet werden. Ferner können die hergestellten Stäube im Gesundheitswesen verwendet werden. Die Erfindung betrifft somit auch ein Verfahren zum Behandeln von Pflanzen, umfassend die Schritte (a) Bereitstellen eines Formkörpers wie hier beschrieben (b) Überführen dieses Formkörpers in einen Kalziumoxid-reichen Staub, insbesondere unter Verwendung einer Vorrichtung wie hier beschrieben und (c) Kontaktieren von Pflanzen mit diesem Staub.

Die nachstehend genannten **Beispiele** dienen der weiteren Erläuterung der Erfindung; sie sollen die Erfindung in keiner Weise limitieren.

### Bsp.1

In diesem Beispiel werden Lagerformen (Tabletten) durch Verpressen von CaO hergestellt:
Nekafin-2-Pulver (Fa. Kalkfabrik Netstal) wurde als CaO-Rohmaterial verwendet. Stearinsäure (Sigma Aldrich, 95 %) wurde in Chloroform zu 5 Gewichts % aufgelöst. Das CaO Pulver wurde nassimprägniert im Verhältnis 5:3 (Feststoff : Flüssigkeit). Danach wurde die Paste im Mörser homogenisiert und über Nacht im Vakuum getrocknet.

Die beschichteten Pulver wurden in Tabletten mit einer konventionellen Tablettenpresse (Labor-Exzenterpresse der Fa. Korsch oder Erweka), bei Raumtemperatur T = 25 °C gepresst. Tabletten-Dimensionen(n = 5) wurden mit Mikrometer (Mitutuyo, Δ ± 0.001 mm) gemessen. Die Tablettenform ist in Fig.8 dargestellt, die mittlere Dichte beträgt ρ = 1.92 ± 0.33 g cm⁻³:

| **ex.** | **Masse, mg** | **Höhe (1), mm** | **Höhe (2), mm** | **Durchm., mm** | **Volumen, mm³** | **Dichte, g cm⁻³** |
|---|---|---|---|---|---|---|
| **1** | 765.7 | 5.6 | 4 | 10.21 | 392.9909985 | 1.948391 |
| **2** | 730 | 5.5 | 3.85 | 10.238 | 384.8590886 | 1.896798 |
| **3** | 774 | 5.65 | 3.96 | 10.23 | 394.9431092 | 1.959776 |
| **4** | 698.5 | 5.4 | 3.5 | 10.245 | 366.8375783 | 1.904112 |
| **5** | 770 | 5.77 | 4.27 | 10.18 | 408.5913371 | 1.884524 |

Die erhaltenen Tabletten sind formstabil, können unter normalen Bedingungen (Luftfeuchtigkeit ca. 40%, Lagertemperatur ca. 25°C) über mehrere Wochen problemlos gelagert werden. Diese Tabletten können in einer Vorrichtung nach Bsp. 2 verwendet werden.

### Bsp.2

In diesem Beispiel wird die hier beschriebene Vorrichtung dargestellt.

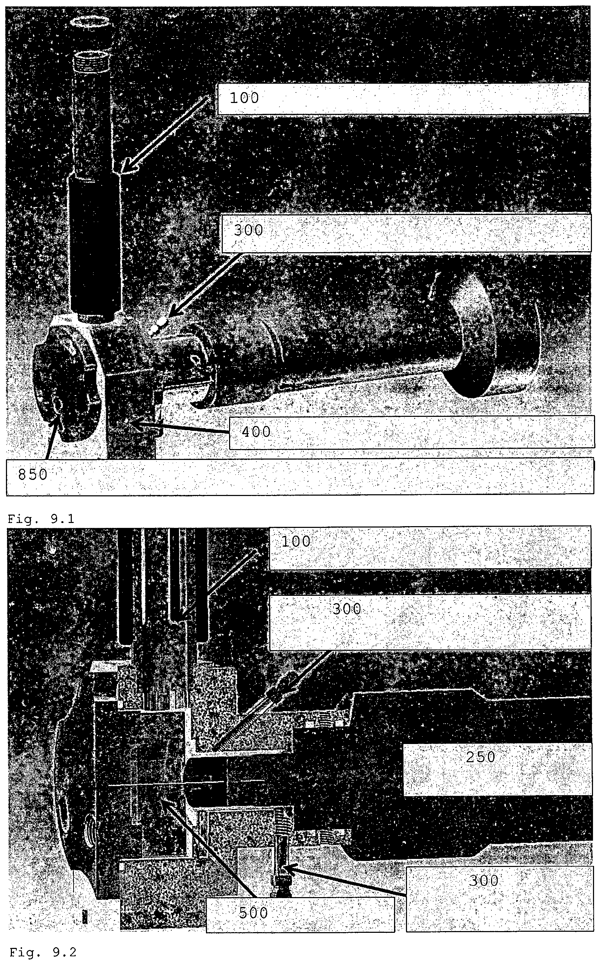

Fig. 9.1 zeigt diese Vorrichtung mit einer Antriebseinheit 250 (Gradschleifer GGS 18 V-LI Professional der Firma Bosch), einem Gehäuse 200 und einem Vorratsbehälter 100. Gehäuse und Vorratsbehälter sind aus Edelstahl bzw. Oberflächenvergütetem Aluminium gefräst.

Fig. 9.2 zeigt einen Schnitt der Vorrichtung mit Innenansicht des Gehäuses 200, in welchem eine Bürste 500 angeordnet ist. Der Durchmesser der Bürste ist je nach Typ 4-8 cm, aus Edelstahlborsten (erhältlich bei Fa. Würth unter der Bezeichnung Rundbürste oder Schaftrundbürste). Einlass 300 und Auslass 400 sind ersichtlich.

Mit dieser Vorrichtung können die Tabletten gemäss Bsp. 1 in einen feinen Staub überführt werden. Dieser Staub kann bspw. direkt auf Pflanzen aufgebracht werden, um so Pflanzenkrankheiten zu bekämpfen oder diesen vorzubeugen.

## Patentansprüche

1. Verwendung von Formkörpern, welche
a. 67 - 99 m-% gebrannten Kalk und 1 - 33 m-% organischen Binder enthalten, und
b. eine Porosität im Bereich 20-70 vol.-% aufweisen,
zur Herstellung eines Kalziumoxid-reichen Staubes zur Behandlung von Pflanzen und/oder von Oberflächen von Nahrungsmitteln.

2. Verwendung nach Anspruch 1, **dadurch gekennzeichnet, dass** besagter Formkörper
a. ein zylindrischer Formkörper mit einem Gewicht von 0.2-50 kg ist und / oder
b. aus Tabletten mit einem Gewicht von 0.001-0.1 kg besteht.

3. Verwendung nach Anspruch 1 oder 2, **dadurch gekennzeichnet, dass** besagter Formkörper ein Gewicht im Bereich vom 1g - 50kg aufweist.

4. Verwendung nach einem der Ansprüche 1 bis 3, **dadurch gekennzeichnet, dass** besagter Formkörper eine Dichte im Bereich 1.5-2.5 g/cm³ aufweist.

5. Verwendung nach einem der Ansprüche 1 bis 4, **dadurch gekennzeichnet, dass** in besagtem Formkörper der gebrannte Kalk einen Erdalkalimetall-Anteil von mindestens 90 atom-% Ca und höchstens 10 atom-% Mg beträgt.

6. Verwendung nach einem der Ansprüche 1 bis 5, **dadurch gekennzeichnet, dass** im besagten Formkörper der Binder eine organische Verbindungen mit saurem Charakter ist.

7. Verwendung nach einem der Ansprüche 1 bis 6, **dadurch gekennzeichnet, dass** im besagten Formkörper der Binder ausgewählt ist aus der Gruppe umfassend Tannine, Fettsäuren, Aminosäuren, Proteine und mit Säuregruppen funktionalisierte Polysaccharide.

8. Verfahren zum Behandeln von Objekten, umfassend die Schritte
a. Bereitstellen eines Formkörpers wie in einem der Ansprüche 1 - 7 beschrieben,
b. Überführen dieses Formkörpers in einen Kalziumoxid-reichen Staub,
c. Kontaktieren von Objekten mit diesem Staub,
wobei das Objekt ausgewählt ist aus der Gruppe umfassend Pflanzen und Oberflächen von Nahrungsmitteln.

9. Verfahren nach Anspruch 8, wobei das Objekt ausgewählt ist aus der Gruppe umfassend Pflanzen.

## Claims

1. Use of shaped articles, which
a. contain 67 - 99% burnt lime and 1-33 % organic binder, and
b. have a porosity in the range between 20-70 vol.%,
for manufacturing a calcium oxide-rich powder for treating plants and/or surfaces of foodstuff.

2. Use according to claim 1, **characterized in that** said shaped article
a. is a cylindrical body weighing 0.2-50 kg; and/or
b. consists of tablets weighing 0.001-0.1 kg.

3. Use according to claim 1 or 2, **characterized in that** said shaped article has a weight in the range 1 g - 50 kg.

4. Use according to one of the claims 1 to 3, **characterized in that** said shaped article has a density in the range 1.5-2.5 g/cm³.

5. Use according to one of the claims 1 to 4, **characterized in that** in said shaped article the alkaline earth metal portion of the burnt lime contains at least 90 atomic % Ca and at most 10 atomic % Mg.

6. Use according to one of the claims 1 to 5, **characterized in that** in said shaped article the binder is an organic compound with acid character.

7. Use according to one of the claims 1 to 6, **characterized in that** in said shaped article the binder is selected from the group comprising tannins, fatty acids, amino acids, proteins and polysaccharides functionalized with acid groups.

8. Method for treating objects, comprising the steps of
a. providing a shaped article as described in one of the claims 1 - 7,
b. converting this shaped article into a calcium oxide-rich powder,
c. contacting objects with this powder,
wherein the object is selected from the group comprising plants and surfaces of food articles.

9. Method according to claim 8, wherein the object is selected from the group comprising plants.

## Revendications

1. Utilisation des articles formés, qui
a. contiennent de 67 à 99 % de chaux calcinée et de 1 à 33 % de liant organique, et
b. ont une porosité comprise entre 20 et 70 % en volume,
pour la fabrication d'une poudre riche en oxyde de calcium pour le traitement de plantes et/ou de surfaces de produits alimentaires.

2. Utilisation selon la revendication 1, **caractérisée en ce que** ledit article formé
a. est un corps cylindrique pesant de 0,2-50 kg ; et/ou
b. se compose de comprimés pesant de 0,001 à 0,1 kg.

3. Utilisation selon la revendication 1 ou 2, **caractérisée en ce que** ledit article formé a un poids compris entre 1 g et 50 kg.

4. Utilisation selon l'une des revendications 1 à 3, **caractérisée en ce que** ledit article formé a une masse volumique dans la plage 1,5-2,5 g/cm³.

5. Utilisation selon l'une des revendications 1 à 4, **caractérisée en ce que** dans ledit article formé la partie en métal alcalino-terreux de la chaux calcinée contient au moins 90 % en atomes de Ca et au plus 10 % en atomes de Mg.

6. Utilisation selon l'une des revendications 1 à 5, **caractérisée en ce que** dans ledit article formé le liant est un composé organique à caractère acide.

7. Utilisation selon l'une des revendications 1 à 6, **caractérisée en ce que** dans ledit article formé le liant est choisi dans le groupe comprenant les tanins, les acides gras, les acides aminés, les protéines et les polysaccharides fonctionnalisés par des groupes acides.

8. Procédé de traitement d'objets, comprenant les étapes consistant à
a. fournir un article formé tel que décrit dans l'une des revendications 1 à 7,
b. convertir ce article formé en une poudre riche en oxyde de calcium,
c. mettre en contact des objets avec cette poudre,
l'objet étant choisi dans le groupe comprenant les plantes et les surfaces d'articles alimentaires.

9. Procédé selon la revendication 8, dans lequel l'objet est choisi dans le groupe comprenant les plantes.
